Europäisches Patentamt

(19) European Patent Office

Office européen des brevets

(11) Publication number: **0 003 811**
A2

# EUROPEAN PATENT APPLICATION

(21) Application number: 79100462.5

(22) Date of filing: 16.02.79

(51) Int. Cl.²: **F 24 F 1/00**
E 06 B 7/28, F 24 D 5/02

(30) Priority: 24.02.78 IT 4002778

(43) Date of publication of application:
05.09.79 Bulletin 79/18

(84) Designated contracting states:
BE CH DE FR GB IT LU NL SE

(71) Applicant: Ditta FERRARI CLAUDIO di LUIGI FERRARI &
C. S.p.A.
1120/A, VIA Vignolese
I-41010 COLLEGAROLA (Modena)(IT)

(72) Inventor: Roli, Antonio
1070 Via Vignolese
I-41100 Modena(IT)

(72) Inventor: Sola, Claudio
19, Via Valdrighi
I-41100 Modena(IT)

(74) Representative: Gardi, Giuliano
Gardipatent-Palazzo Prora 605,Via Giardini
I-41100 Modena(IT)

(54) Method and plant for the heating and/or conditioning of rooms.

(57) Method and plant for heating and/or conditioning of rooms, the air to be treated being taken from the environment by means of a fan at one or both lower parts of a window or French window through one or more suction openings (26) of a hollow metal structure as a portal of upturned U shape surrounding and supporting the counterframe (3) which supports the frame (1, 2) of the window or the French window located in a suitable niche in the masonry and projecting from it; the air thus sucked is guided through one or more heat exchangers (22) situated at the inside of the hollow risers of the U shaped portal; it passes through one or more humidifiers (30) also situated at the inside of the portal and is then distributed in the room by means of a distributor located in the crosspiece of the portal above the window or the French window and equipped with conveying diaphragms (38) and movable air deflectors (41). The air heating and/or conditioning plant can operated heating or cooling the room by forced air circulation by means of a fan (24) or by natural air circulation and radiation from the portal.

./.

Fig.1

- 1 -

Method and plant for the heating and/or conditioning of rooms.

The invention concerns a method and a plant for the heating and/or conditioning of rooms, that is to say a new method of heating and/or cooling the rooms of buildings of any type equipped with windows or French windows; this method being realized by means of a plant, which can be used for the heating and/or cooling with, moreover, a possibility of adjusting the humidity degree of the rooms.

The prior state of art includes a traditional method according to which heating plants are equipped with water or air radiators fitted either in a special space under the window-sill or, protruding or not, on walls, ceilings or floors; or they are equipped with convectors, that is to say heat exchangers operated by fans: the heating or cooling fluid generally comes from a central generator by means of tubes; the radiators, sometimes being integrated by humidifiers, being in any case independent from the windows or French windows, except those conditioners inserted in the glass of the window.

This prior state of art is susceptible of further improvements having the following aim: the increase of the efficiency of the plant compared to a radiation and natural convection plant as well as to a forced air circulation heating plant; the increase of the speed of intervention of the heating plant as to the thermic level of the room with regard to both traditional types of plant; the increase of the uniformity of distribution of the temperatu

re compared to that which may be found in traditional ty
pes of plants, the possibility to combine the prerequisi
tes of both types of traditional plant and to have the
traditional plant work with forced convection in certain
periods based only on the prerequisites of the radiation
and natural convection plant; the possibility of pre-ar
ranging the locations of the elements of the plant in the
wall structure of the building, these elements being sui
tably devised, prefabricated and normalized in order to
obtain the best insulation conditions of the room towards
the outside as well as economy of production and installation of the plant.
From what was previously said, derives the necessity of
resolving the technical problem to find a method, which
consents to associate in a programmable way the speed of
intervention on the thermic level of the room, which is
typical of those plants equipped with convectors and/or
conditioners with forced air circulation with the radiation effects and those of natural convection typical of
the plants equipped with water radiators; such a method
having to be carried out by means of a plant installed
in such a way that it consents the reciprocal integration
of the forced convection heating and/or conditioning method with the one with radiation and natural convection,
choosing at this aim a new type of installation, which
permits improvement of the speed of variation of the ter
mic level, of the temperature distribution and the efficiency as well as a more rational insulation towards the
outside and, advantageously, the adoption of prefabricated plant elements to be inserted into their proper spaces in the masonry economically pre-arranged even at the
beginning of the construction of the building.
The invention resolves the above mentioned technical pro
blem by adopting a method, which foresees the aspiration
of air from the environment itself in the lower part at
the side of a window or a French window as for the forced
component of the heating as well as the cooling of the
room; this air is then to be treated and guided upwards, passed through a heat exchanger with possibly a humidifier and, already treated, let into the environment from above the window or French window; the plant, which realizes such a method, includes mainly: a hollow portal shaped like an upturned U, which surrounds and supports the frame of the window or French window recessed in a suitable niche provided in the masonry, from which it projects into the room that is to be heated and/or conditioned; internally it is equipped with at least one fan in at least one of its risers; this fan sucks the air through a suction opening in the lower part of the riser; moreover it is equipped with at least one heat exchanger situated higer at the inside of the riser itself, possibly with a humidifier and a distributor of the treated air ending with movable deflectors that can be directed downwards, located in a hollow crosspiece that joins the two risers of the said cable portal at the upside; between the upper part of the window frame of French window frame and the said distributor, the winding drum of the rolling shutter can be mounted with its container case and the support, being part of the portal structure; at the inside of this structure a thermic insulation is to be arranged towards the outside and at the part of said case, towards the inside, too; both risers of the said structure, or only one of them, can contain the fan, the heat exchanger, the possible humidifier and tubes and/or cables of different types necessary in the building; because of the projection into the room of the whole hollow structure of the portal, the plant forms an ample radiator with a radiating surface shaped like an upturned U, which determines itself the transmission of heat by radiation and natural convection, even if the fan is not running, in the case of use for heating purposes.

The advantages obtained by this invention are: when heating rooms, the possibility of having the plant work in a limited way at the emission of heat by radiation and by natural convection, maintaining a basic thermic level, which can be increased very quickly, when necessary, or in a programmed way, by means of intervention of the fan, which determines the forced air convection; a greater uniformity and speed of temperature distribution, also because of the up turned U shape of the radiator portal; a higher efficiency of the plant because of the better utilization of the heat owing to the co-existence of the two types of operation and because of a smaller loss of heat towards the outside thanks to the greater rationality of the insulation obtained by the new type of plant; the possibility of using the plant also for the cooling of the room and for the adjustment of the humidity level, which makes use of the plant possible in any climatic condition.

One way of carrying out the invention is illustrated in the three enclosed designs in order to give an example:

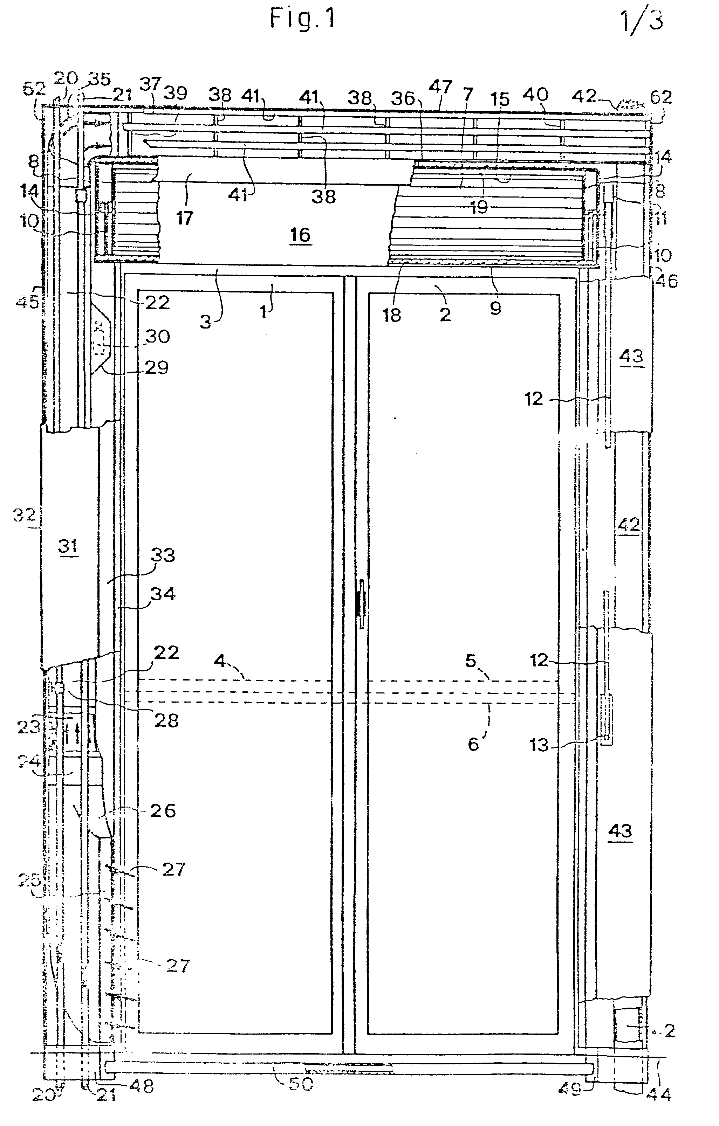

Figure 1 is a front view, interrupted and in part section, of a French window, the counterframe of which is integral with the framework of the plant; in the same Figure 1 the lower part of the counterframe and frame of a window with a sill is indicated with dashed lines;

Figure 2 is a left side view, interrupted and in part section, of the heating and conditioning plant with aspirator and heat exchanger;

Figure 3 is a side view, from the opposite side than that of Figure 2, of the same plant;

Figure 4 is the section IV-IV of Figure 2;

Figure 5 is the section V-V of Figure 2.

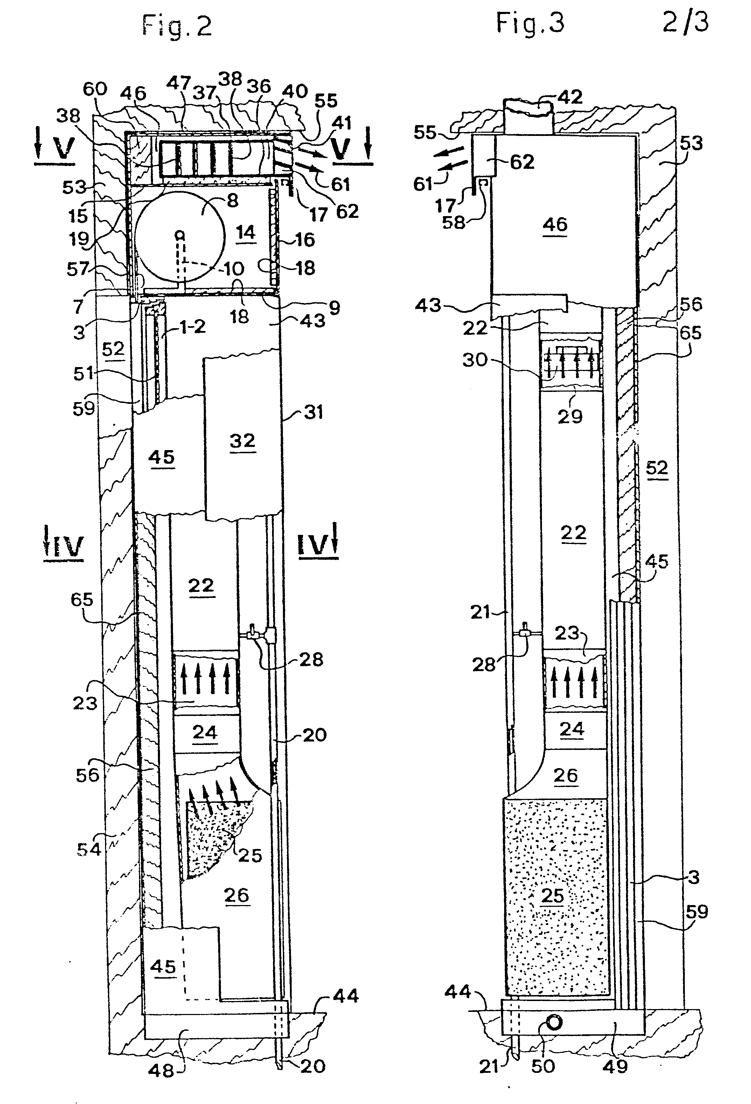

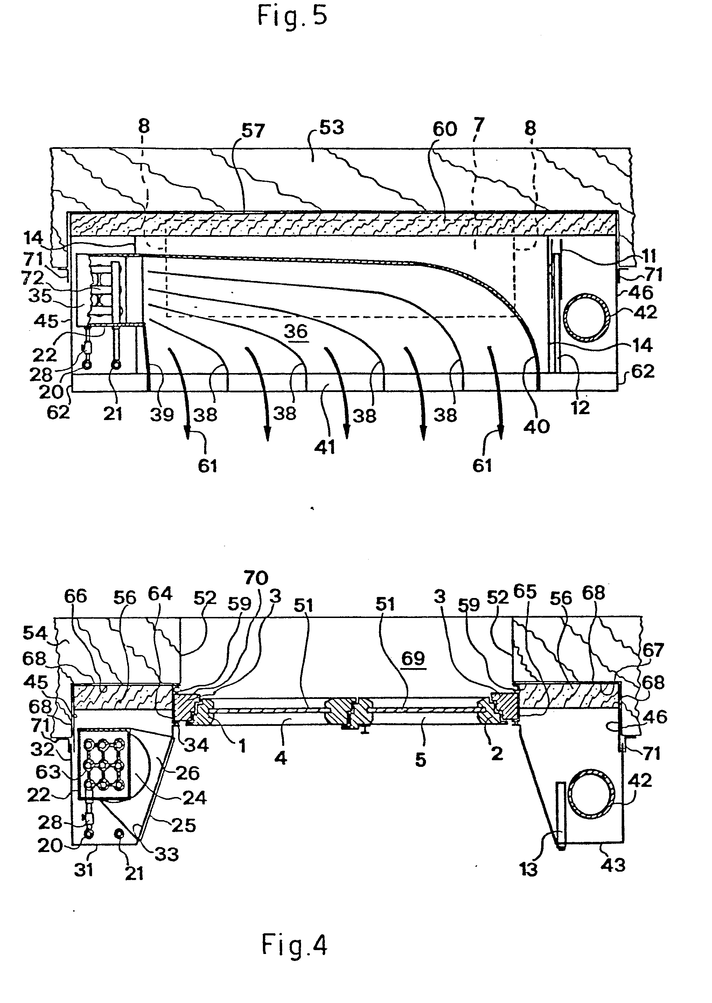

The indications are as follows: 1 and 2 are the frames of the French window; 3 is the counterframe of the frames 1 and 2; 4 and 5 are the lower parts of the frames of a window with a sill; 6 is the lower part of the counterframe of frames 4 and 5; 7 is the rolling shutter wound on the drum with the headers 8, the shaft of which is supported by the base plate 9 of the case by means of the elements 10; 11 12 and 13 indicate respectively a pulley keyed on the drum shaft with headers 8, the manoeuvring belt of the rolling shutter 7 and the container for the winding of the belt itself; 14 indicates the side panels of the case having a base plate 9; 15 is the upper panel of the case of the drum 8 or another closing device; 16 indicates the removable cover of the case, 17 a guard for the fixing of the sliding rod of the curtain supports behind the case; 18 indicates the upper and lower insulating panels to protect the room from loss of heat to the outside; 19 indicates an upper insulating panel on the wall 15 to avoid loss of heat from the fluid distributor to the room; 20 and 21 indicate vertical through tubes that are part of the feeding and discharge circuit of the centralized heating or cooling fluid passing through the tubular vertical heat exchanger 22, communicating in the inferior part with the fan 24 by means of a tubular fitting 23, said fan 24 sucking the air from the lower part of the room, through the filter 25 of the opening of the manifold 26 according to the arrows 27; 28 indicates a cock to interrupt the flow of the fluid through the heat exchanger 22; 29 indicates a side cell communicating with the heat exchanger 22 for the housing of the humidifier 30; 31 indicates the front face of a vertical cover having a side wall 32 to shield, also in an aesthetical way, the rising column of the plant forming air rising; 33 indicates one side of the said cover inclined towards the inside having an aesthetical as well as a containing function, where the suction manifold 26 opens; 34 indicates an inside terminal leading edge of the said cover, 35 an elbow fitting to conduct the treated air from the heat exchanger to the air distributor; 36 and 37 indicate the upper and lower sides of the crosspiece of the two risers forming the housing of the distributor of air to the room equipped with curved vertical conveying diaphragms 38 closed between the side walls 39 and 40; the housing of the air distributor leans on the insulating panel 19 supported by the upper plate 15 containing the winding drum of the rolling shutter 7; 41 indicates the air deflector elements conveying the air downwards and possibly movable; 42 indicates a vertical tubular through element contained at the inside of the vertical cover 43 specularly symmetrical with the vertical cover 31,32,33,34 relative to the other riser, the element 42 being intended to convey other tubes for purposes that have nothing to do with the plant, such as for instance the water discharge, the water supply plant, the electric system, the telephone and television system a.s.o.; 44 indicates the line of the floor; 45, 46, 47 indicate respectively the two outer sides of the portal risers for the fixing of the plant to the masonry and the upper side of the portal to be fixed to the ceiling; 48 and 49 indicate two box elements intended to close the lower part of the spaces of the covers 31, 32, 33, 34 and 43, the elements having the same outline as the latter and representing a reference for the assembly of the plant, as these box elements or socles are partially sank into the thickness of the floor; 50 indicates a tubular element forming the stay rod between the box elements 48 and 49 as well as the duct of cables and/or tubes being part of the plant or not; 51 indicates the window glass, 52 the side walls of the window opening, 53 the supporting beam of the window opening, 54 the header of the outside wall, 55 the ceiling forming an extension of the niche for the housing of the wall 42 of the portal; 56 indicates an insulating panel inserted between the tubular element of the heat exchanger 22 and the back wall 57 forming the upper connexion of the back walls of the two portal risers; 58 indicates the guide of the curtain supports which are not represented; 59 indicates the guide pair of the rolling shutter 7, 60 an insulating panel between the air distributor and the beam 53; 61 indicates the arrows showing the direction of the air yielded to the room, 62 a box structure surrounding peripherally the deflectors 41 and fixed to the wall 45, riser of the portal of the frame; 63 indicates inner tubular elements, for instance of a heat exchanger; 64 and 65 indicate the vertical inner supporting walls of the two risers, which have a straight line section substantially of U shape, equipped with vertical back walls 66 and 67, the vertical portal of upturned U shape being recessed in each of the two niches 68 placed into the masonry at the sides of the window opening 69 with a limited depth at the front face 70 of the counterframe 3 or even superior to the face itself; in the upper part of the back wall of the two risers extends over the whole length of the opening and the niches of the window or French window and assumes the number 57 (Figure 2 and 5); in the lower part these risers end with the box elements 48 and 49; 71 indicates joint covering sections, 72 manifolds placed above the tubular elements 63 of the heat exchanger.

The plant operates in the following way: after start the fan 24, the suction opening 25 sucks the air to be treated from the downward part, conveying it through the fitting 23 into the vertical heat exchanger 22, possibly equipped with a cell 29 for the humidifier 30, from which it passes through the fitting 35 into the air distribution case, the diaphragms 38 of which guide the treated air into a normal direction to the plane of the wall; the deflectors 41 direct the air along course inclined downwards at an angle depending on the depth and purpose of service of the room, thus determining a uniform air circulation with consequent uniform temperature distribution; it is intended for heating purposes, that a natural air circulation can be obtained, when the heat exchanger is running, depending on the length of the rising tubular column forming the vertical part of the course of the air; thus the fan 24 has to intervene only in case of necessity by means of a manual control or a thermostat or by means of a proper adjusting device of the temperature with a programme according to the hours of the day and the rooms themselves, permitting to maintain a temperature of 15 - 16°C in the absence of persons by means of radiation or natural convection, which can rather quickly be increased by intervention of the fan 24, which consequently means a considerable saving of energy.

In the practical realization, the metal materials forming the elements of the portal and the plant, with the exception of the insulating materials, can be chosen according to the special, also aesthetical, requirements; the same is true also for the straight line sections of the portal risers, which, moreover, must meet also the requirements of good radiation and good natural convection of the heat in the envi ronment.

Moreover, the plant might present modifications, such as, for instance, the following: the tube 42 of the right-hand riser might be eliminated to give way to a treating device like the one in the left-hand riser; moreover, the tube 42 might remain at its place even in case of a repetition of the treatment device in the right-hand riser,-it might even be added in the left-hand riser, as it is foreseen that the diaphragms 38 are distributed in two specularly simmetrical formations in the case of double suction; further, the heat exchanger 22 might be of any suitable type and the opening 25 might be in the front instead of being located at an inwardly inclined side, or, in case of a window with sill, it might even be located in a cross element.

For aesthetical reasons, it is also foreseen, that it is sufficient in a room with two or more windows or French windows to use only one of them for the treatment of the air in the room, whilst the other one or the other ones are installed of the same type but without inside plant.

Moreover, it is foreseen, that the method and the plant can be applied also to doors and windows without rolling shutters, which means an evident simplification and the elimination of the winding drum of the rolling shutter 7, of its container case, of the guide pair 59 and of the belt 12; this permits moreover to decrease the encumberment and to increase the span of the windows and French windows. Finally, the portal should obviously be equipped with more than two active or inactive risers in the case of two or more windows or French windows.

- 1 -

CLAIMS

1. Method for the heating and/or conditioning of rooms, intended for air treatment by means of a heat exchanger fed with heating or cooling fluid coming from a central generating system and of possible humidifier, natural and/or forced treated air circulation in the room and radiation of heat in the room, c h a r a c t e r i z e d    b y t h e   f a c t   t h a t   the air to be treated taken from one or both lower parts of the sides of a window or French window is conveyed, respectively, into one or two vertical radiating ducts situated at the sides of the said window or French window and being part with these of a heating and/or conditioning plant, in order to be treated and let into the room above the said window or French window.

2. Plant for heating and/or conditioning of rooms working according to the method of claim 1, including at least one vertical duct with at least one fan inserted into it in order to obtain the suction of the air through the filter, with which the lower opening of the duct is equipped, and its passage through at least one heat exchanger fed by tubes conveying a centralized fluid and a possible humidifier situated in said duct, and a distributing element in the upper part for distribution of the treated air from a bove, the superior distributing element receiving the air from the duct by means of diaphragms which deviate it at 90° and of following air deflectors, which can be moved downwards, c h a r a c t e r i z e d   b y   t h e f a c t   t h a t   it mainly includes in a prefabricated structure a hollow portal of upturned U shape, which surrounds the frame of the window or the French window on three sides and supports it and which is recessed in a niche prearranged in the masonry, from which it protrudes into the room to be heated and/or conditioned, one or both of the hollow risers of the said portals forming a vertical duct for the suction and treatment of the air and for the passage of tubes and ducts of the plant itself and/or other systems and facilities; the hollow crosspiece which connects in the upper part the hollow risers forming a case for the distribution and the direction of the treated air flow in the room.

3. Plant according to claim 2 characterized by the fact that a case containing the winding drum of the rolling shutter, which is supported by the ground of the case itself in a rotating way, is supported by the risers between the upper side of the frame of the window or French window inserted in the portal of upturned U shape and the lower side of the hollow crossbeam connecting the hollow risers.

4. Plant according to claim 2 characterized by the fact, that a panel of insulating material (respectively 56 and 60) is applied to the inner side of the walls of each riser of the portal and of the air distributing case, which are outwardly in contact with the masonry of the corresponding prefabricated product.

5. Plant according to claim 2 characterized by the fact that an insulating panel (19) is inserted between the wall (15) and the above wall (36) of the air distributor.

6. Plant according to claim 3 characterized by the fact that the inner face of the case cover containing the drum (8) and of the back wall of the case itself are covered by insulating material (18).

7. Plant according to claims 2 and 3 characterized by the fact that each hollow riser of the portal consists of two parts, one bearing part (64, 65) with straight line section of U shape, which supports also the upper air distribution case and the drum container case (8) completed by the back wall (66, 67) and the side wall (45, 46), respectively for fixing said portal to the counterframe (3) of the window frame or French window frame (1, 2) and to the masonry of the niche (68) containing the portal; the other one forming the cover of each hollow riser serves as front closure of the vertical duct to obtain convection and radiation and projects into the room to be heated and/or conditioned.

8. Plant according to claim 2, characterized by the fact, that an indrpendent vertical duct, which communicates in the upper part with the said hollow crosspiece is contained in the inside of the riser of the portal and encloses, in the indicated order: the opening (26) with filter (25) located in the lower part of the housing, the fan (24), the heat exchanger (22) and the cell of the humidifier (29).

9. Plant according to claim 2 characterized by the fact that, in the case of a window with sill, the air suction opening, simple or multiple, is located in a cross duct connecting the two risers of the portal at their lower part.

10. Plant according to claim 2 characterized by the fact that the base of each hollow riser, having the shape of a hollow socle (48, 49) and equipped with the same straight line section form of the corresponding hollow riser, into which it is fixed, is on the other hand fixed to the floor; it is foreseen that a tube (50) connects each pair of said socles (48, 49) to allow the inside passage of one or more other plants or facilities.

Fig.2

Fig.3

Fig.5

Fig.4